# EUROPEAN PATENT SPECIFICATION

(11) **EP 4 027 266 B1**
(45) Date of publication and mention of the grant of the patent: **27.05.2026**
(21) Application number: 21305016.4
(22) Date of filing: 06.01.2021
(51) Int. Cl.: G06V 40/40, G06V 10/46, G06V 10/24, G06V 10/60, G06V 10/30

(54) **MOIRÉ PATTERN DETECTION IN DIGITAL IMAGES AND A LIVENESS DETECTION SYSTEM THEREOF**
ERKENNUNG VON MOIRÉ-MUSTERN IN DIGITALEN BILDERN UND SYSTEM ZUR ERKENNUNG VON LEBENDIGKEIT
DÉTECTION DE MOTIF MOIRÉ DANS DES IMAGES NUMÉRIQUES ET SON SYSTÈME DE DÉTECTION DE CARACTÈRE VIVANT

(43) Date of publication of application: 13.07.2022
(73) Proprietor: Amadeus S.A.S., 06410 Biot (FR)
(72) Inventor: ABRAHAM, Eldho, 06410 Biot (FR)
(74) Representative: Samson & Partner Patentanwälte mbB

(56) References cited:
- EP-A1- 3 467 709
- US-A1- 2018 005 020
- GARCIA DIOGO CAETANO ET AL: "Face-Spoofing 2D-Detection Based on Moir�-Pattern Analysis", IEE TRANSACTIONS ON INFORMATION FORENSICS AND SECURITY, IEEE , PISCATWAY , NJ, US, vol. 10, no. 4, 1 April 2015 (2015-04-01), pages 778 - 786, XP011576296, ISSN: 1556-6013, [retrieved on 20150319], DOI: 10.1109/TIFS.2015.2411394
- ANONYMOUS: "Exposure fusion - Wikipedia", 5 August 2011 (2011-08-05), XP055816482, Retrieved from the Internet <URL:https://en.wikipedia.org/wiki/Exposure_fusion> [retrieved on 20210622]
- YUJING SUN ET AL: "Moire Photo Restoration Using Multiresolution Convolutional Neural Networks", ARXIV.ORG, CORNELL UNIVERSITY LIBRARY, 201 OLIN LIBRARY CORNELL UNIVERSITY ITHACA, NY 14853, 8 May 2018 (2018-05-08), XP081138916, DOI: 10.1109/TIP.2018.2834737

## Description

### Field

The present invention relates to the detection of moiré patterns in digital images. Furthermore, the present invention relates to the liveness detection of captured biometric features for biometric verification.

### Background

Moiré patterns are considered to be interference patterns occurring due to the overlap of the digital grids of the camera sensor resulting in a high-frequency noise in the image. Detection and removal of these patterns is a crucial step in many applications. For example, detection and removal of moiré patterns is an important step in a biometric verification system, where these patterns may be used to determine liveness of the captured biometric features, thereby preventing spoofing attacks. Similarly, moiré patterns may be used in scanning applications to improve Optical Character Recognition (OCR).

An example of a known method for detecting moiré patterns in a digital image is presented in E. Abraham, "Moiré Pattern Detection using Wavelet Decomposition and Convolutional Neural Network," 2018 IEEE Symposium Series on Computational Intelligence (SSCI), Bangalore, India, 2018, pp. 1275-1279, doi: 10.1109/SSCI.2018.8628746. A disadvantage of the current techniques for detecting moiré patterns is that their detection accuracy may be affected by the intensity profile of the digital image. This is because the frequency strength of the moiré patterns, which determines their visibility in the captured image, highly depends on the pixel intensity of the digital image. For example, the lower the pixel intensity of the captured, thereby the darker the captured image, the lower the frequency strength of the moiré patterns present in the image. Similar effects may be observed in overexposed areas of the captured image. As a result, due to the pixel intensity variations in a digital image, the moiré patterns may not be accurately detected and/or extracted, which may be detrimental in preventing spoofing attacks in a biometric verification system.

Garcia et al. propose in "Face-Spoofing 2D-Detection Based on Moiré-Pattern Analysis", IEEE Transactions on Information Forensics and Security, vol. 10, no. 4, pp. 778 - 786, April 2015, a face-spoofing detection by searching for Moiré patterns due to the overlap of the digital grids. The conditions under which these patterns arise are first described, and their detection is proposed which is based on peak detection in the frequency domain. Furthermore, Garcia et al. present experimental results for the algorithm for an image database of facial shots under several conditions.

### Summary

An aim of the present invention is to provide a system and a method for detecting moiré patterns in a digital image that overcomes the disadvantages of the prior art solutions.

A further aim of the present invention is to provide a system and a method for verifying liveness of captured biometric features of a person in a biometric verification system.

The aims of the present invention are achieved according to the invention with the system and method showing the technical characteristics of the respective independent claims. Preferred embodiments of the present invention are disclosed in the dependent claims.

According to an aspect of the present invention, a method for detecting moiré pattern information in digital images is presented. The method comprises the steps of:
receiving a set of digital images of a subject and/or scene, the set of digital images comprising images captured by one or more cameras and at different resolutions and/or exposure;
aligning the imaged subject and/or scene within the set of digital images;
segmenting each image of the set of digital images into sections;
based on the segmentation results, analysing a light intensity of each image of the set of digital images both in a spatial and temporal direction,
thereby generating an intensity profile for the set of digital images;
based on the intensity profile, correlating each digital image of the set of digital images with the corresponding image resolution and/or exposure
detecting moiré patterns from the set of digital images to determine for each digital image of the set of digital images sections of the imaged subject and/or scene containing moiré pattern information at the corresponding
image resolution and/or exposure, by determining whether a frequency strength of the moiré pattern is within a predetermined range, wherein the moiré pattern information comprises a frequency strength of the detected moiré pattern;
selecting digital images from the set with sections of the imaged subject and/or scene containing the moiré pattern information; and
generating a merged digital image for the captured subject and/or scene from the selected digital images by fusing together tonal values and pixel intensities of the digital images using a high-dynamic-range technique, thereby generating a fused moiré pattern image, the merged digital image comprising the moiré pattern information detected in each of the selected digital images, feeding the fused moiré pattern image to a liveness detection algorithm of a biometric verification system, wherein a frequency strength and/or profile of the fused moiré pattern image is compared to a predetermined liveness threshold;
if the liveness detection system of the biometric verification system returns a negative result, determining that the images subject and/or scene as being generated form a fake image.

The method of the present invention enhances the detection of moiré patterns in a digital image by processing and combining moiré pattern information detected from a plurality of digital images of the same subject and/or scene captured at different image resolutions and/or exposures. In general, the pixel intensity of a captured object and/or scene would vary within the captured digital image, resulting in image sections having different light/pixel intensity values. As such, regions of the digital image may be presented with different light/pixel intensity values. Moiré patterns are dependent on the pixel intensity of the digital image. For example, moiré patterns may be difficult to detect in dark or overexposed regions of a captured image. Therefore, with traditional techniques, only a small portion of the moiré patterns may be detected in a digital image, due to camera sensor limitations and lighting conditions. Enhancing detection of moiré patterns from regions of the digital image having different pixel intensity values is important in a range of applications which include but not limited to biometric verification, Optical Character Recognition (OCR), and the like. The method of the present invention overcomes the disadvantages of the prior art solutions by extracting moiré pattern information from digital images of the same subject and/or scene captured at different image resolution and/or exposure. As such, it is possible to detect moiré patterns from different regions of the digital images. For example, by progressively increasing the image exposure between successive digital images, it is possible to increase the light intensity of darker regions of the digital images, which may result in the exposure of moiré patterns, leading to their accurate detection. Similarly, by varying the image resolution between successive digital images, it is possible to change the moiré patterns captured in the digital image. As such, different moiré patterns may emerge depending on the image resolution, which may provide further enhance the detection of the moiré patterns from the captured image and/or scene In the method presented herein, moiré pattern information detected and/or extracted from the set of digital images is combined into a single digital image for the representation of the captured object and/or scene. The combined digital image may be generated by combining details from different captured digital images in the set that contain moiré patterns. For example, the merged digital image may be generated using a high dynamic range imaging technique known in the art, which involves capturing multiple images of the same scene using different exposure values, and then combining those images that contained moiré patterns into a single image that represents the range of tonal values within the captured scene and/or object. As such, the merged digital image would contain moiré pattern information from different areas of the digital image, thereby overcoming the disadvantages of the prior art solutions.

According to embodiments of the present invention, the detection of Moiré patterns may be performed using wavelet decomposition and/or a multi-input deep Convolutional Neural Network (CNN).

According to embodiments of the present invention, processing of the set of digital images comprises aligning the subject and/or scene captured in each of the digital images in the set. In general, to compensate for any movement of the subject and/or scene occurred between successive digital images, e.g. head movement of the captured person, the digital images are aligned. For example, the alignment of the digital images may be performed using known image registration techniques known in the art, such as processing the digital images using a digital image aligning algorithm, or another known techniques. For example, image registration may be based on feature registration, pixel-based alignment, or any other known technique.

According to embodiments of the present invention, processing the digital images comprises segmenting each digital image into a grid of predetermined dimensions. According to embodiments of the present invention, processing of the digital images comprises detecting in each digital image the grid sections comprising moiré pattern information. Segmentation aids the temporal analysis of the digital images in the set, thereby simplifying the detection of similar regions in the set of digital images. As such, sections of the digital images containing moiré pattern information may be easily detected and compared to corresponding sections of the remaining digital images. It should be noted that the segmentation of an image may be performed in different ways. For example, the image analysis may grid-based, where the digital image is divided into subsections, or it may object segmentation based, where the digital images are analysed to detect similar regions, e.g. the face of a person.

According to embodiments of the present invention, processing of the digital images comprises analysing the luminous intensity of each digital image in the set both in spatial and temporal direction in the set to determine a combined intensity profile for the set of digital images. Based on the segmentation, the pixel intensity of each digital image is analysed both in spatial and temporal direction to obtain the intensity profile of the stacked digital images. The intensity profile information may be used to determine the frequency strength and/or pattern of the moiré interference noise detected in each digital image and correlate them with the corresponding image exposure and/or resolution in the set of digital images. The correlation of Moiré patterns may be performed using Feature detection and Matching methods like Fourier/Wavelet Transform, SURF, SIFT features, and the like. Also, the correlation may be performed using trained Deep Learning networks like Convolution Neural Networks (CNN).

According to embodiments of the present invention, generating the merged digital image comprises combining areas from different captured digital images in the set that contain moiré patterns into a single image that represents the range of tonal values within the captured scene and/or object. Further, generating of the merged digital image may comprise spatially correlating the extracted moiré pattern information detected from each digital image in the set. According to embodiments of the present invention, generating of the merged digital image comprises extracting a frequency profile of the moiré pattern information. The moiré patterns detected and/or extracted from each digital image may be mapped on the segmentation grid, thereby identifying the sections of the digital image containing moiré pattern information. Due to the variation in the exposure and/or resolution of the digital images in the set, the frequency strength of the moiré patterns detected in each digital image may be different from one another. The merged digital image may be generated based on the selection and combination of digital images and/or sections of digital images. For example, the digital images and/or sections of digital images may be selected based on the detected moiré pattern information meeting certain criteria, e.g. the frequency strength being within a specific range. As such, the extracted moiré patterns detected and/or extracted from the selected sections may be spatially correlated to determine the distribution profile of the resulting moiré frequency in the merged digital image. Furthermore, other known methods may be used to generate the merged digital image. For example, the merged image may be generated by selecting the max frequency or combining the low-high frequencies of the detected moiré patterns together in the temporal direction in the stack of digital images.

According to embodiments of the present invention, the merged digital image is a high dynamic range image.

According to embodiments, the method further comprises the steps of:
capturing a set of digital images of one or biometric features of a person, the set of digital images comprising images captured by one or more cameras and at different resolutions and/or exposure, the receiving of the set of digital images being executed in response to the capturing;
detecting moiré pattern information from the digital images and accordingly generate a merged digital image for the one or more biometric features according to embodiments of the first aspect;
extracting moiré pattern information from the merged digital image; and determining, based on the extracted moiré pattern information, liveness of the one or more biometric features captured in the digital image.

According to embodiments of the second aspect of the present invention, determining liveness comprises the step of extracting a moiré frequency strength from the moiré pattern information and comparing the extracted moiré frequency strength with a liveness threshold.

According to embodiments of the second aspect of the present invention, if the extracted moiré frequency strength is within a first range from the liveness threshold, validating the digital image of the one or more biometric features, otherwise rejecting the digital image.

The method of the present invention may be used in a range of applications. For example, the method for detecting moiré patterns in digital images may be part of a biometric verification system. In a biometric verification system, it is important to be able to distinguish between a spoofing attack and a legitimate access request form a registered user. In spoofing attacks, e.g. facial spoofing, a fraudulent user may try to gain illegitimate access by using a photo, video, or other material of an authorised user's face. As such, the biometric verification system needs to be able to assess the liveness of the captured biometric features accurately. Moiré patterns may be used to determine liveness of the captured biometric features by assessing their resulting frequency and/or pattern profile. For example, capturing an object from a photograph, or video would result in different moiré patterns than capturing the same object in the real world. However, since moiré patterns depend on the intensity profile of the captured digital image, the biometric verification systems may incorrectly detect the moiré patterns from a photograph and/or video of a registered user, thereby leading to a successful spoofing attack. Similarly, a biometric identification system may reject legitimate biometric verification request from a registered user due to the incorrect detection of the Moiré pattern from a live captured digital image. For example, in images with lower intensity, i.e. darker images, the moiré patterns may not be visible, or their frequency may low, and as such moiré patterns may not be accurately detected by the biometric verification system resulting in a successful spoofing attack. The present invention overcomes this issue by extracting a profile of the moiré patterns detected from a plurality of images of the same subject that have been captured at different resolution and/or exposure. As such, with the present invention, it is possible to accurately extract the profile and/or frequency of the moiré patterns from a digital image, thereby improving the accuracy of the biometric verification systems.

According to embodiments of the second aspect of the present invention, capturing of the digital images comprises varying the resolution and/or exposure of the at least one camera within a predefined range between successive capturing of digital images of the one or more biometric features. According to embodiments of the second aspect of the present invention, the resolution and/or exposure of the camera is varied by a predetermined value for each digital image in the set. For example, the exposure and/or image resolution may be progressively adjusted in a stepwise process, wherein each adjustment step is of a predetermined value. For example, the exposure of each digital image may be varied by adjusting the shutter speed and/or aperture of the camera. Similarly, the image resolution may be adjusted by changing the resolution of the camera sensors.

According to embodiments of the second aspect of the present invention, the one or more biometric features are facial features.

According to a third aspect of the present invention, a liveness detection system for biometric authentication is presented, the system comprising:
at least one camera configured to capture digital images of the target biometric features of a person presented for biometric authentication; and
a processor configured to determine liveness of the captured biometric features according to embodiments of the second aspect.

### Brief description of the drawings

The following drawings are provided as an example to explain further and describe various aspects of the invention:
Figures 1 shows an example of capturing a live image of the user.
Figure 2 shows an example of capturing a digital image of a screen or a photograph showing an image of the user.
Figure 3 shows an example of a biometric verification system according to embodiments of the present invention.
Figure 4 shows an example of a processing pipeline for detecting liveness of biometric features according to embodiments of the present invention.
Figure 5 shows an example of varying the resolution of the camera sensor according to embodiments of the present invention.
Figure 6 shows an example of a set of multi-variate digital images captured at different resolutions and/or exposure according to embodiments of the present invention.
Figure 7 shows an example of how the captured multi-variate digital images may be segmented according to embodiments of the present invention.
Figure 8 shows an example of how different moiré patterns may be detected in the different digital images according to embodiments of the present invention.
Figure 9 shows an example of a merged digital image according to embodiments of the present invention.
Figure 10 shows an example of a merged image of the moiré patterns detected in the set of digital images according to embodiments of the present invention.

### Detailed description

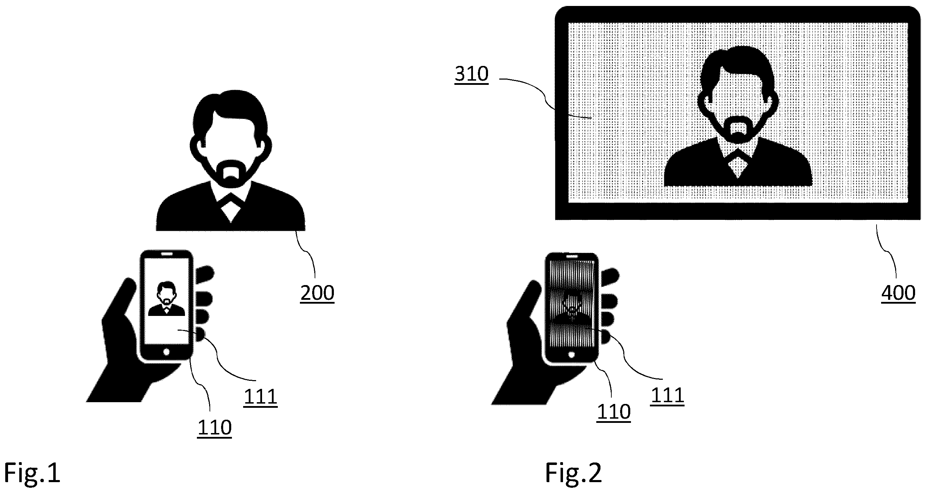

The present invention will be illustrated using the exemplified embodiments shown in figures 1 to 10, which will be described in more detail below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention encompassed by the appended claims. Furthermore, while the invention has been described with references to a particular system and method for detecting moiré patterns in digital images and a corresponding method and system for assessing liveness of biometric features in a biometric verification system, it should be understood by those skilled in the art that the present system and method may be used for the detection of moiré patterns in other application such as in Optical Character Recognition (OCR) applications without departing from the scope of the invention encompassed by the appended claims.

Detection of Moiré patterns in digital images may be used in a range of applications. For example, detection of moiré patterns may aid the detection of the liveness of biometric features in a biometric verification system. Similarly, detection of moiré patterns may be used in an OCR application to improve the detection of characters from a scanned document or a photo. In particular, with regards to the liveness detection, moiré pattern detection in the captured digital images has been shown to improve the liveness detection accuracy. It is known that moiré patterns detected in a captured digital image of a live subject, e.g. a person sitting in front of a camera, would be different from the moiré patterns detected when the captured image is a scan of a document or a photograph of the same subject. As shown in figure 1, capturing the digital image of a person 200 using a capturing equipment 110, e.g. the camera of a mobile phone, may result in the detected moiré patterns having a first frequency strength and/or profile. For example, when the image is displayed on the display of the phone 111, the moiré patterns detected may be less visible, thus having a lower strength, or have a different frequency profile. However, capturing a digital image of a photograph 300 of the same subject may result in moiré patterns having a second frequency strength and/or profile. For example, as shown in figure 2, the moiré patterns detected and/or extracted from a captured digital image of the photograph 400 displayed on the display screen 111 of the mobile phone 110 may be of higher frequency strength and/or different profile compared to moiré patterns detected in figure 1. This is because, the photograph 400 of the person already contains moiré patterns 310, which are captured and may be amplified by the image sensor of the capture device 110. As such, by detecting the moiré patterns in the captured digital images, it is possible to detect liveness of a subject, which is particularly useful in preventing biometric spoofing attacks.

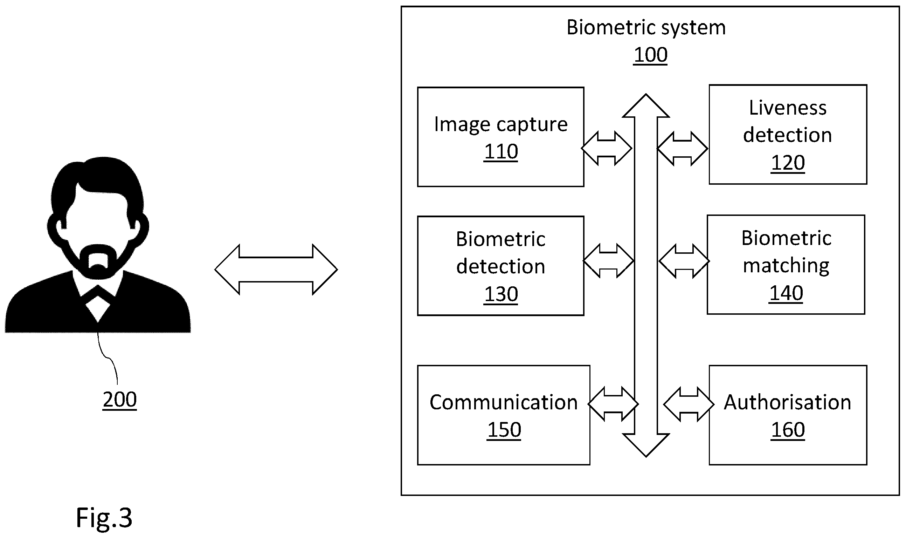

Figure 3 shows an example of a biometric verification system 100 configured to verify the identity of a user according to embodiments of the present invention. The biometric verification system 100 may be configured to capture biometric features, e.g. facial features, via a capturing module 110, e.g. a camera. The captured biometric features may be processed by a liveness detection module 120 to determine liveness. Once liveness is determined, the biometric features may be detected in the captured digital images by a biometric detection module 130, and then matched to stored biometric features by a biometric matching module 140. If a biometric match is identified, then the user is verified and additionally may be granted permission by an authorisation module 160 to perform an action, e.g. to access an application and the like. A communication module 150 may be provided to communicate with the user and with other connected systems. At any stage, biometric verification may be aborted. For example, if the liveness detection fails or matching biometric feature is not found.

Traditionally liveness detection may be performed by detecting moiré patterns on the captured image. However, a disadvantage of the known techniques is that they rely on extracting moiré patterns from a single image. It is well known that the accuracy of moiré pattern detection may be affected by the pixel intensity of the captured image. For example, it has been found that the lower the pixel intensity, and thus the darker the captured image, the lower the frequency strength of the moiré patterns. As such, the accuracy of the liveness detection may be highly affected by the pixel intensity of the captured image. Fluctuations in the accuracy of the liveness detection may lead to false positives, e.g. successful spoofing attacks, or false-negative, e.g. incorrectly rejecting live biometric features of a user. In contrast, the liveness detection system of the present invention aims to improve the liveness detection accuracy by assessing the moiré patterns detected from a set of multi-variate digital images taken at different image resolutions and/or exposures. In other words, the present invention varies the image resolution and/or exposure of the captured digital images to adjust the pixel intensity of the captured biometric features and/or the moiré patterns generated. By adjusting the light intensity and/or resolution of a captured image it is possible to adjust the frequency strength and/or profile of the detected and/or extracted moiré patterns, thus enabling detection of moiré patterns from captured images having varying pixel intensity.

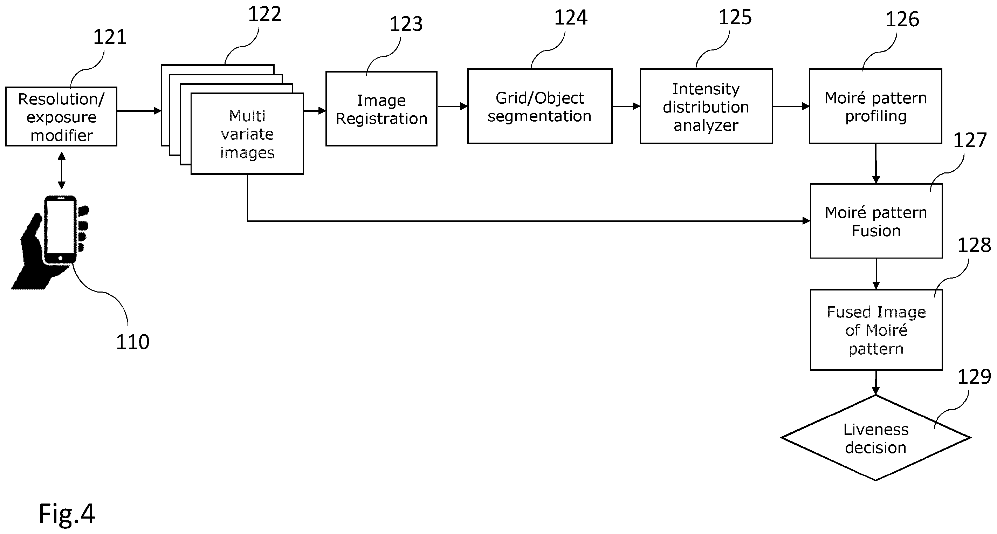

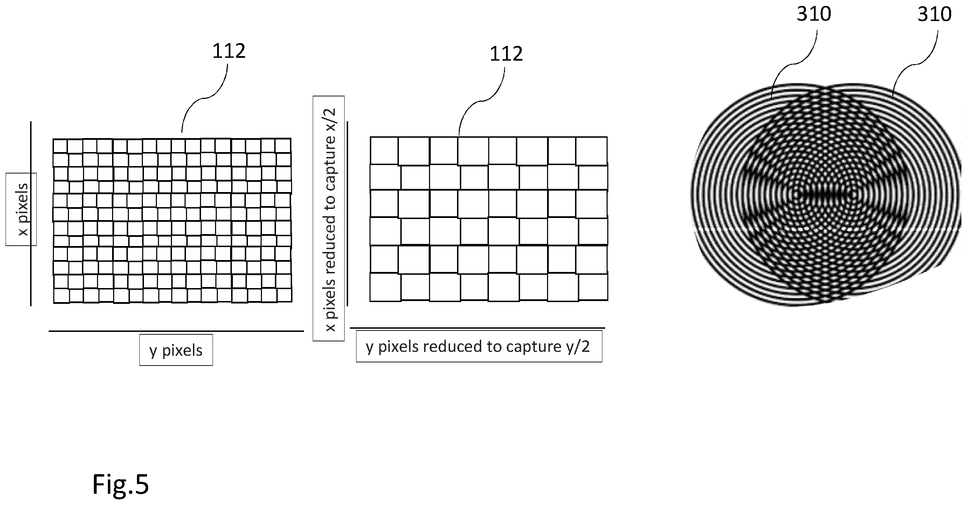

Figure 4 shows an example of a liveness detection processing pipeline according to embodiments of the present invention. The liveness detection processing pipeline is based on detecting moiré patterns from a set of multi-variate digital images of the captured subject. In the context of the present invention, multi-variate digital images refer to digital images captured by one or more capture imaging devices 110 at different image resolutions and/or exposures. The liveness detection processing pipeline may be part of the liveness detection module 120 of the biometric verification system 100. As shown in figure 4, an image capturing device 110 may be provided, e.g. a camera of a mobile phone or the like, that is capable of capturing digital images. Once an authentication request is received at the biometric verification system 100, the liveness detection module 120 may operate the capturing device 120 to capture a set of multi-variate digital images 122, of the subject and/or scene, e.g. facial features of a person. For each digital image captured, the resolution and/or exposure setting of the capturing device 110 may be altered by a predetermined value using a resolution/exposure modifier module 121. For example, for each digital image, the aperture and/or shutter speed of the camera, which controls the image exposure, may be varied by a predetermined value. Similarly, the resolution of each digital image in the set may be altered, e.g. increase or decrease by a predetermined value. The image resolution and/or exposure may be varied for each digital image 122 by adjusting firmware and/or hardware settings of the capturing module 110. For example, the resolution/exposure modifier 121 may be programmed to control the capture module 110 so that each digital image is taken at a different image exposure and/or resolution, e.g. by changing the shutter speed, aperture, and/or image resolution. Furthermore, the capturing module 110 may comprise a plurality of cameras, each configured to capture digital images at different image resolutions and/or exposures. As such, the resolution/exposure modifier 121 may switch between the different cameras of the capturing module to capture the digital images 122. In addition, the resolution of the capturing module 110 may be adjusted by providing an additional hardware component in front of the camera sensor to adjust the camera sensor resolution similarly to coded photography. For example, the additional hardware component may be a mask that is configured to be placed in front of the camera sensors so that the camera sensor resolution is reduced. The external mask may be designed such that when it is placed in front of a camera sensor reduces its resolution. An example of coded photography using hardware components is discussed in Raskar, Ramesh. (2009) " Computational Photography: Epsilon to Coded Photograph". As shown in figure 5, a reduction in the camera sensor 112 resolution may result in different moiré patterns 310 in the digital image, which may be used to assess liveness of the captured subject and/or scene. The number of digital images 122 to be captured entirely depends on the application and the detailed required. At least two images may be captured at different exposure and/or resolution.

Returning to figure 4, once the desired number of digital images in the set have been acquired, an image registration module 123 may be provided to align the captured subject and/or scene within the set of digital images 122. The image registration may be performed as a post-processing step using any known available algorithm. Equally, image registration may be performed during capturing of the digital image, e.g. using sensors to detect and remove the movement from the captured image. Once aligned, each image is segmented into sections using a segmentation module 124. The segmentation may be a grid segmentation or any other known segmentation technique, e.g. object and/or shape detection, and the like. Based on the segmentation results, the intensity profile of each digital image is analysed using an intensity analysis module 125. The intensity analysis module 125 is configured to analyse, using any known methods, the light intensity of the digital image both in the spatial and temporal direction, thereby generating an intensity profile for the set of digital images. Based on the intensity profile, each digital image may be correlated with the corresponding image resolution and/or exposure. The moiré patterns may be detected in each digital image, by determining for each digital image the sections containing moiré pattern information. For example, a section may be considered as containing moiré pattern information if the corresponding frequency strength is within a predetermined range. The moiré patterns may be detected using a known method such as wavelet techniques known in the art. Once moiré patterns have been identified in each digital image 122, a profile of the moiré patterns within the set of digital images may be generated using a moiré pattern profiling module 126. The digital images containing moiré patterns may be merged into a single digital image, e.g. using a high-dynamic-range (HDR) technique or similar algorithms. In this way, the relevant tonal values and pixel intensities of the relevant digital images may be fused together into a single image resulting in the fusion of the moiré patterns identified at each corresponding image resolution and/or exposure. A fused image of the moiré patterns in the merged digital image may be generated using a fused moiré pattern generation module 127. The fused moiré pattern image may be fed to a liveness detection algorithm, whereby the frequency strength and/or profile of the fused moiré pattern may be compared to a predetermine liveness threshold and/or value. The result may be fed to the remaining modules of a biometric verification system 100. For example, if liveness detection returns a negative result, then the captured biometric features may be considered as being generated from a fake image, thereby rejecting the request. Otherwise, the process may continue to the biometric detection and matching, as previously explained with reference to figure 3.

In different applications, such an OCR application, the processing pipeline may be adapted accordingly so that it only applies to the detection of the moiré patterns in a merged digital image, such as the one generated by the fused image of moiré patterns module 128. Similarly, a more simplified process pipeline may be adopted, that may include the steps of :
- capturing a set of digital images for the target subject and/or scene, each taken using a different image resolution and/or exposure;
- processing each digital image in the set to determine sections of the imaged subject and/or scene containing moiré pattern information at the corresponding image resolution and/or exposure;
- selecting digital images from the set with sections of the imaged subject and/or scene containing moiré pattern information; and
- generating a merged digital image for the captured subject and/or scene from the selected digital images, the merged digital image comprising the moiré pattern information detected in each of the selected digital images.

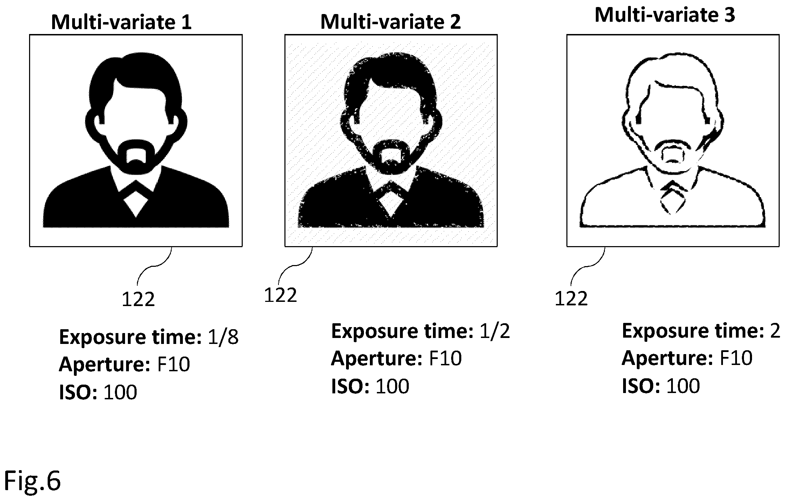

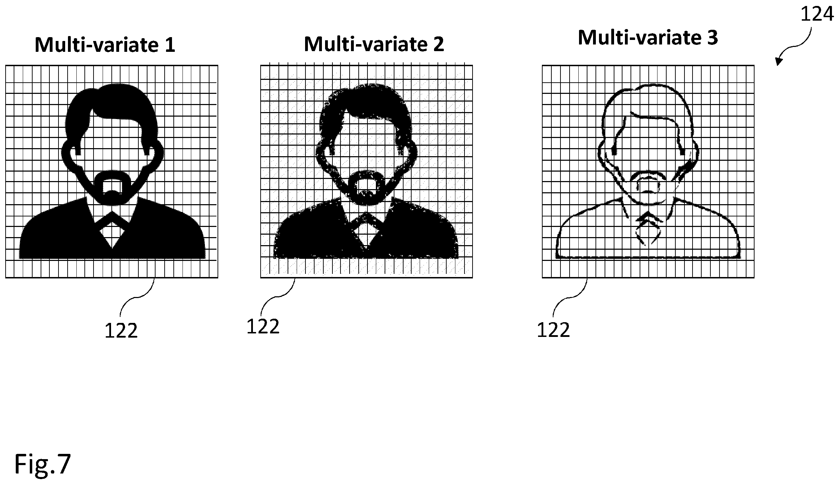

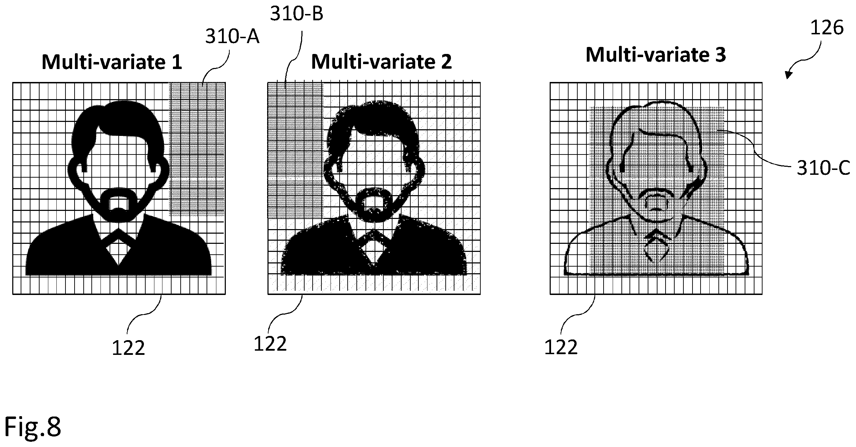

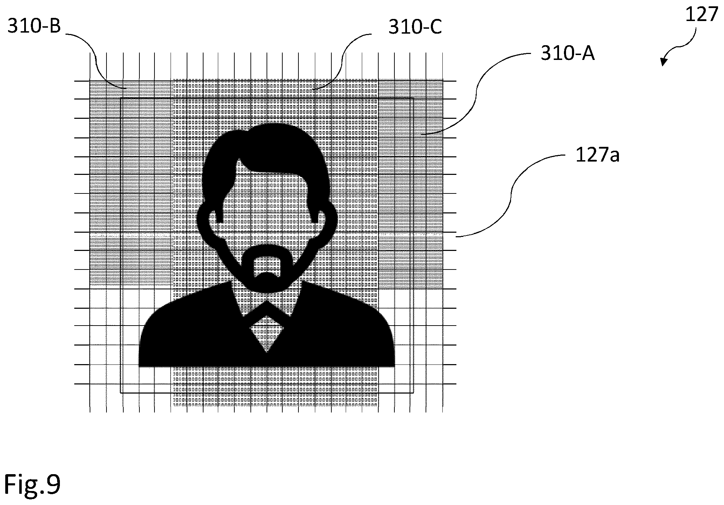

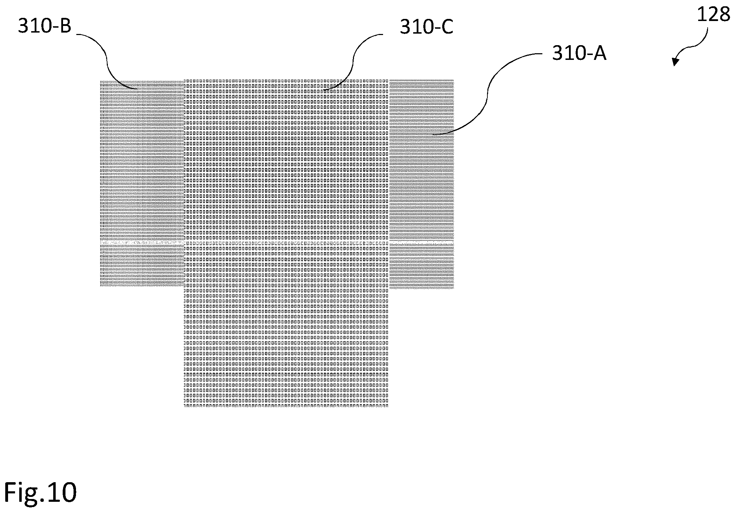

Figures 6 to 10 show examples of how a fused image of moiré patterns in the set of digital images may be generated. For example, as shown in figure 6, a set of three multi-variate images 122 of the face of a person may be captured using a camera. Each image may be captured at a different resolution and/or exposure, resulting in a variation of the light intensity within the set of digital images 122. For example, each digital images 122 may be captured at a different exposure time, e.g. 1/8, 1/2, 2, while the remaining parameters, e.g. ISO and aperture, may remain the same. It should be noted that the other parameters may also be adjusted as needed. Once captured, digital images 122 may be segmented into a grid of predetermined dimensions using an image segmentation module 124, as shown in figure 7. Based on the segmentation, the light intensity profile of each digital image 122 may be determined. The moiré patterns 310-A, 310-B, and 310C, may be detected in each digital image 122 using a moiré pattern profiling module 126, as shown in figure 8. The relevant digital images containing moiré patterns of a certain frequency and/or profile, in this case all three, are merged using a moiré pattern fusion module 127 generate a merged digital image 127a containing the moiré patterns from all the relevant images 122, as shown in figure 9. The merged digital image 127a may be an HDR image, thus containing details from all relevant digital images 122. From the merged digital image 127a the fused moiré pattern image 128 may be extracted, as shown in figure 10.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in the computer and that, when read and executed by one or more processors in a computer, cause that computer to perform the operations necessary to execute operations and/or elements embodying the various aspects of the embodiments of the invention. The computer-readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer-readable storage medium having the computer-readable program instructions thereon for causing a processor to carry out aspects of the embodiments of the invention. Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or an external computer or external storage device via a network. Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the appended claims. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

The invention in its broader aspects is therefore not limited to the specific details, representative apparatus and method, and illustrative examples shown and described. Accordingly, departures may be made from such details without departing from the scope of the appended claims.

## Claims

1. A method for detecting liveness in digital images (122), the method comprising the steps of:
receiving a set of digital images (122) of a subject and/or scene, the set of digital images (122) comprising images captured by one or more cameras (110) and at different resolutions and/or exposure;
aligning the imaged subject and/or scene within the set of digital images (122); segmenting each image of the set of digital images (122) into sections;
based on the segmentation results, analysing a light intensity of each image of the set of digital images (122) both in a spatial and temporal direction, thereby generating an intensity profile for the set of digital images (122);
based on the intensity profile, correlating each digital image of the set of digital images (122) with the corresponding image resolution and/or exposure;
detecting moiré patterns (310) in the set of digital images (122) to determine for each digital image of the set of digital images (122) sections of the imaged subject and/or scene containing moiré pattern information at the corresponding image resolution and/or exposure, by determining whether a frequency strength of the moiré pattern is within a predetermined range, wherein the moiré pattern information comprises a frequency strength of the detected moiré pattern (310);
selecting digital images (122) from the set with sections of the imaged subject and/or scene containing the moiré pattern information; and
generating a merged digital image (127a) for the captured subject and/or scene from the selected digital images (122) by fusing together tonal values and pixel intensities of the digital images (122) using a high-dynamic-range technique, thereby generating a fused moiré pattern image, the merged digital image (127a) comprising the moiré pattern information detected in each of the selected digital images (122);
feeding the fused moiré pattern image to a liveness detection algorithm of a biometric verification system, wherein a frequency strength and/or profile of the fused moiré pattern image is compared to a predetermined liveness threshold;
if the liveness detection system of the biometric verification system returns a negative result, determining that the images subject and/or scene as being generated form a fake image.

2. The method according to claim 1, wherein processing the digital images (122) comprises aligning the subject and/or scene captured in each of the digital images (122) in the set.

3. The method of claim 1 or 2, wherein processing the digital images (122) comprises segmenting each digital image (122) into a grid of predetermined dimensions.

4. The method of claim 3, wherein processing of the digital images (122) comprises detecting in each digital image (122) the grid sections comprising the moiré pattern information.

5. The method of claim 4, wherein processing of the digital images (122) comprises analysing the luminous intensity of each digital image (122) in the set both in spatial and temporal direction in the set to determine a combined intensity profile for the set of digital images (122).

6. The method according to any one of the preceding claims, wherein generating of the merged digital image (127a) comprises combining areas from different captured digital images (122) in the set that contain the moiré patterns (310) into a single image that represents the range of tonal values within the captured scene and/or object.

7. The method of any one of the preceding claims, wherein generating the merged digital image (127a) comprises extracting a frequency profile of the moiré pattern information.

8. The method of any one of the preceding claims, wherein the merged digital image (127a) is a high dynamic range image.

9. The method according to any one of the preceding claims, further comprising the steps of:
capturing a set of digital images (122) of one or biometric features of a person (200), the set of digital images (122) comprising images captured by one or more cameras (110) and at different resolutions and/or exposure, the receiving of the set of digital images (122) being executed in response to the capturing;
detecting the moiré pattern information from the digital images (122) and accordingly generate a merged digital image (127a) for the one or more biometric features according to the method of claims 1 to 8;
extracting the moiré pattern information from the merged digital image (127a); and
determining, based on the extracted moiré pattern information, liveness of the one or more biometric features captured in the digital image (122).

10. The method of claim 9, wherein determining liveness comprises the step of extracting a moiré frequency strength from the moiré pattern information and comparing the extracted moiré frequency strength with a liveness threshold.

11. The method according to claim 10, wherein, if the extracted moiré frequency strength is within a first range from the liveness threshold, validating the digital image (122) of the one or more biometric features, otherwise rejecting the digital image (122).

12. The method according to any one of claims 9 to 11, wherein capturing of the digital images (122) comprises varying the resolution and/or exposure of the at least one camera (110) within a predefined range between successive capturing of digital images (122) of the one or more biometric features.

13. The method according to claim 12, wherein the resolution and/or exposure of the camera is varied by a predetermined value for each digital image (122) in the set.

14. The method of any one of claims 9 to 13, wherein the one or more biometric features are facial features.

15. A liveness detection system for biometric authentication, the system comprising:
at least one camera (110) configured to capture digital images (122) of the target biometric features of a person (200) presented for biometric authentication; and
a processor configured to determine liveness of the captured biometric features according to the method of any one of claims 9 to 14.

## Patentansprüche

1. Verfahren zum Erkennen von Lebendigkeit in digitalen Bildern (122), umfassend die Schritte:
Empfangen eines Satzes digitaler Bilder (122) eines Subjekts und/oder einer Szene, wobei der Satz digitaler Bilder (122) Bilder umfasst, die von einer oder mehreren Kameras (110) und mit unterschiedlichen Auflösungen und/oder Belichtungen aufgenommen wurden;
Ausrichten des abgebildeten Subjekts und/oder der Szene innerhalb des Satzes digitaler Bilder (122);
Segmentieren jedes Bildes des Satzes digitaler Bilder (122) in Abschnitte;
Analysieren, basierend auf den Segmentierungsergebnissen, einer Lichtintensität jedes Bildes des Satzes digitaler Bilder (122) sowohl in räumlicher als auch in zeitlicher Richtung, wodurch ein Intensitätsprofil für den Satz digitaler Bilder (122) erzeugt wird;
Korrelieren, basierend auf dem Intensitätsprofil, jedes digitalen Bildes des Satzes digitaler Bilder (122) mit der entsprechenden Bildauflösung und/oder Belichtung;
Erkennen von Moiré-Mustern (310) in dem Satz digitaler Bilder (122), um für jedes digitale Bild des Satzes digitaler Bilder (122) Abschnitte des abgebildeten Subjekts und/oder der Szene zu bestimmen, die Moiré-Musterinformationen bei der entsprechenden Bildauflösung und/oder Belichtung enthalten, indem bestimmt wird, ob eine Frequenzstärke des Moiré-Musters innerhalb eines vorbestimmten Bereichs liegt, wobei die Moiré-Musterinformationen eine Frequenzstärke des erkannten Moiré-Musters (310) umfassen;
Auswählen digitaler Bilder (122) aus dem Satz mit Abschnitten des abgebildeten Subjekts und/oder der Szene, die die Moiré-Musterinformationen enthalten; und
Erzeugen eines zusammengeführten digitalen Bildes (127a) für das aufgenommene Subjekt und/oder die Szene aus den ausgewählten digitalen Bildern (122) durch Zusammenführen von Tonwerten und Pixelintensitäten der digitalen Bilder (122) unter Verwendung einer High-Dynamic-Range-Technik, wodurch ein vereinigtes Moiré-Musterbild erzeugt wird, wobei das zusammengeführte digitale Bild (127a) die in jedem der ausgewählten digitalen Bilder (122) erkannten Moiré-Musterinformationen umfasst;
Einspeisen des vereinigten Moiré-Musterbildes in einen Lebendigkeits-Erkennungsalgorithmus eines biometrischen Verifikationssystems, wobei eine Frequenzstärke und/oder ein Profil des vereinigten Moiré-Musterbildes mit einem vorbestimmten Lebendigkeits-Schwellenwert verglichen wird;
Bestimmen, wenn das Lebendigkeits-Erkennungssystem des biometrischen Verifikationssystems ein negatives Ergebnis zurückgibt, dass das abgebildete Subjekt und/oder die Szene von einem gefälschten Bild erzeugt wurde.

2. Verfahren nach Anspruch 1, wobei die Verarbeitung der digitalen Bilder (122) das Ausrichten des Subjekts und/oder der Szene umfasst, die in jedem der digitalen Bilder (122) in dem Satz aufgenommen sind.

3. Verfahren nach Anspruch 1 oder 2, wobei die Verarbeitung der digitalen Bilder (122) das Segmentieren jedes digitalen Bildes (122) in ein Gitter vorbestimmter Abmessungen umfasst.

4. Verfahren nach Anspruch 3, wobei die Verarbeitung der digitalen Bilder (122) das Erkennen in jedem digitalen Bild (122) der Gitterabschnitte umfasst, die die Moiré-Musterinformationen enthalten.

5. Verfahren nach Anspruch 4, wobei die Verarbeitung der digitalen Bilder (122) das Analysieren der Leuchtintensität jedes digitalen Bildes (122) in dem Satz sowohl in räumlicher als auch in zeitlicher Richtung in dem Satz umfasst, um ein kombiniertes Intensitätsprofil für den Satz digitaler Bilder (122) zu bestimmen.

6. Verfahren nach einem der vorhergehenden Ansprüche, wobei das Erzeugen des zusammengeführten digitalen Bildes (127a) das Kombinieren von Bereichen aus verschiedenen aufgenommenen digitalen Bildern (122) in dem Satz umfasst, die die Moiré-Muster (310) enthalten, in ein einziges Bild, das den Bereich von Tonwerten innerhalb der aufgenommenen Szene und/oder des aufgenommenen Objekts repräsentiert.

7. Verfahren nach einem der vorhergehenden Ansprüche, wobei das Erzeugen des zusammengeführten digitalen Bildes (127a) das Extrahieren eines Frequenzprofils der Moiré-Musterinformationen umfasst.

8. Verfahren nach einem der vorhergehenden Ansprüche, wobei das zusammengeführte digitale Bild (127a) ein High-Dynamic-Range-Bild ist.

9. Verfahren nach einem der vorhergehenden Ansprüche, ferner umfassend die Schritte:
Aufnehmen eines Satzes digitaler Bilder (122) eines oder mehrerer biometrischer Merkmale einer Person (200), wobei der Satz digitaler Bilder (122) Bilder umfasst, die von einer oder mehreren Kameras (110) und mit unterschiedlichen Auflösungen und/oder Belichtungen aufgenommen wurden, wobei das Empfangen des Satzes digitaler Bilder (122) als Reaktion auf das Aufnehmen ausgeführt wird;
Erkennen der Moiré-Musterinformationen aus den digitalen Bildern (122) und entsprechendes Erzeugen eines zusammengeführten digitalen Bildes (127a) für das eine oder die mehreren biometrischen Merkmale gemäß dem Verfahren der Ansprüche 1 bis 8;
Extrahieren der Moiré-Musterinformationen aus dem zusammengeführten digitalen Bild (127a); und
Bestimmen der Lebendigkeit des einen oder der mehreren biometrischen Merkmale, die in dem digitalen Bild (122) aufgenommen sind, basierend auf den extrahierten Moiré-Musterinformationen.

10. Verfahren nach Anspruch 9, wobei das Bestimmen der Lebendigkeit den Schritt des Extrahierens einer Moiré-Frequenzstärke aus den Moire-Musterinformationen und des Vergleichens der extrahierten Moiré-Frequenzstärke mit einem Lebendigkeits-Schwellenwert umfasst.

11. Verfahren nach Anspruch 10, wobei, wenn die extrahierte Moiré-Frequenzstärke innerhalb eines ersten Bereichs vom Lebendigkeits-Schwellenwert liegt, das digitale Bild (122) des einen oder der mehreren biometrischen Merkmale validiert und andernfalls das digitale Bild (122) verworfen wird.

12. Verfahren nach einem der Ansprüche 9 bis 11, wobei das Aufnehmen der digitalen Bilder (122) das Variieren der Auflösung und/oder Belichtung der mindestens einen Kamera (110) innerhalb eines vordefinierten Bereichs zwischen aufeinanderfolgenden Aufnahmen digitaler Bilder (122) des einen oder der mehreren biometrischen Merkmale umfasst.

13. Verfahren nach Anspruch 12, wobei die Auflösung und/oder Belichtung der Kamera für jedes digitale Bild (122) in dem Satz um einen vorbestimmten Wert variiert wird.

14. Verfahren nach einem der Ansprüche 9 bis 13, wobei das eine oder die mehreren biometrischen Merkmale Gesichtszüge sind.

15. Lebendigkeits-Erkennungssystem für biometrische Authentifizierung, umfassend:
mindestens eine Kamera (110), die eingerichtet ist, digitale Bilder (122) der Zielbiometriemerkmale einer Person (200), die zur biometrischen Authentifizierung herangezogen wird, aufzunehmen; und
einen Prozessor, der eingerichtet ist, die Lebendigkeit der aufgenommenen biometrischen Merkmale gemäß dem Verfahren nach einem der Ansprüche 9 bis 14 zu bestimmen.

## Revendications

1. Méthode de détection de vivacité dans des images numériques (122), la méthode comprenant les étapes suivantes :
la réception d'un ensemble d'images numériques (122) d'un sujet et/ou d'une scène, l'ensemble d'images numériques (122) comprenant des images capturées par une ou plusieurs caméras (110) et à différentes résolutions et/ou expositions ;
l'alignement du sujet et/ou de la scène imagés au sein de l'ensemble d'images numériques (122) ;
la segmentation de chaque image de l'ensemble d'images numériques (122) en sections ;
sur la base des résultats de segmentation, l'analyse d'une intensité lumineuse de chaque image de l'ensemble d'images numériques (122) à la fois dans une direction spatiale et temporelle, générant ainsi un profil d'intensité pour l'ensemble d'images numériques (122) ;
sur la base du profil d'intensité, la corrélation de chaque image numérique de l'ensemble d'images numériques (122) avec la résolution et/ou l'exposition d'image correspondante ;
la détection de motifs moirés (310) dans l'ensemble d'images numériques (122) pour déterminer, pour chaque image numérique de l'ensemble d'images numériques (122), des sections du sujet et/ou de la scène imagés contenant des informations de motif moiré à la résolution et/ou à l'exposition d'image correspondante, en déterminant si une intensité de fréquence du motif moiré est dans une plage prédéterminée, dans laquelle les informations de motif moiré comprennent une intensité de fréquence du motif moiré (310) détecté ;
la sélection d'images numériques (122) à partir de l'ensemble avec des sections du sujet et/ou de la scène imagés contenant les informations de motif moiré ; et
la génération d'une image numérique fusionnée (127a) pour le sujet et/ou la scène capturés à partir des images numériques (122) sélectionnées en fusionnant ensemble des valeurs tonales et des intensités de pixels des images numériques (122) à l'aide d'une technique à plage dynamique élevée, générant ainsi une image de motif moiré fusionné, l'image numérique fusionnée (127a) comprenant les informations de motif moiré détectées dans chacune des images numériques (122) sélectionnées ;
l'alimentation de l'image de motif moiré fusionnée vers un algorithme de détection de vivacité d'un système de vérification biométrique, dans laquelle une intensité de fréquence et/ou un profil de l'image de motif moiré fusionné sont comparés à un seuil de vivacité prédéterminé ;
si le système de détection de vivacité du système de vérification biométrique renvoie un résultat négatif, la détermination que le sujet et/ou la scène d'image en cours de génération forment une fausse image.

2. Méthode selon la revendication 1, dans laquelle le traitement des images numériques (122) comprend l'alignement du sujet et/ou de la scène capturés dans chacune des images numériques (122) de l'ensemble.

3. Méthode selon la revendication 1 ou 2, dans laquelle le traitement des images numériques (122) comprend la segmentation de chaque image numérique (122) en une grille de dimensions prédéterminées.

4. Méthode selon la revendication 3, dans laquelle le traitement des images numériques (122) comprend la détection, dans chaque image numérique (122), des sections de grille comprenant les informations de motif moiré.

5. Méthode selon la revendication 4, dans laquelle le traitement des images numériques (122) comprend l'analyse de l'intensité lumineuse de chaque image numérique (122) dans l'ensemble à la fois dans la direction spatiale et temporelle dans l'ensemble pour déterminer un profil d'intensité combiné pour l'ensemble d'images numériques (122).

6. Méthode selon l'une quelconque des revendications précédentes, dans laquelle la génération de l'image numérique fusionnée (127a) comprend la combinaison de zones à partir de différentes images numériques (122) capturées dans l'ensemble qui contiennent les motifs moirés (310) en une seule image qui représente la plage de valeurs tonales au sein de la scène et/ou de l'objet capturés.

7. Méthode selon l'une quelconque des revendications précédentes, dans laquelle la génération de l'image numérique fusionnée (127a) comprend l'extraction d'un profil de fréquence des informations de motif moiré.

8. Méthode selon l'une quelconque des revendications précédentes, dans laquelle l'image numérique fusionnée (127a) est une image à plage dynamique élevée.

9. Méthode selon l'une quelconque des revendications précédentes, comprenant en outre les étapes suivantes :
la capture d'un ensemble d'images numériques (122) d'une ou plusieurs caractéristiques biométriques d'une personne (200), l'ensemble d'images numériques (122) comprenant des images capturées par une ou plusieurs caméras (110) et à différentes résolutions et/ou expositions, la réception de l'ensemble d'images numériques (122) étant exécutée en réponse à la capture ;
la détection des informations de motif moiré à partir des images numériques (122) et la génération en conséquence d'une image numérique fusionnée (127a) pour les une ou plusieurs caractéristiques biométriques selon la méthode des revendications 1 à 8 ;
l'extraction des informations de motif moiré à partir de l'image numérique fusionnée (127a) ; et
la détermination, sur la base des informations de motif moiré extraites, de la vivacité des une ou plusieurs caractéristiques biométriques capturées dans l'image numérique (122).

10. Méthode selon la revendication 9, dans laquelle la détermination de la vivacité comprend l'étape d'extraction d'une intensité de fréquence moiré à partir des informations de motif moiré et de comparaison de l'intensité de fréquence de moiré extraite à un seuil de vivacité.

11. Méthode selon la revendication 10, dans laquelle, si l'intensité de fréquence de moiré extraite est dans une première plage à partir du seuil de vivacité, la validation de l'image numérique (122) des une ou plusieurs caractéristiques biométriques, sinon le rejet de l'image numérique (122).

12. Méthode selon l'une quelconque des revendications 9 à 11, dans laquelle la capture des images numériques (122) comprend la variation de la résolution et/ou de l'exposition de l'au moins une caméra (110) dans une plage prédéfinie entre la capture successive d'images numériques (122) des une ou plusieurs caractéristiques biométriques.

13. Méthode selon la revendication 12, dans laquelle la résolution et/ou l'exposition de la caméra sont variées d'une valeur prédéterminée pour chaque image numérique (122) dans l'ensemble.

14. Méthode selon l'une quelconque des revendications 9 à 13, dans laquelle les une ou plusieurs caractéristiques biométriques sont des caractéristiques faciales.

15. Système de détection de vivacité pour authentification biométrique, le système comprenant :
au moins une caméra (110) configurée pour capturer des images numériques (122) des caractéristiques biométriques cibles d'une personne (200) présentée pour une authentification biométrique ;
et un processeur configuré pour déterminer la vivacité des caractéristiques biométriques capturées selon la méthode de l'une quelconque des revendications 9 à 14.
